# EUROPEAN PATENT SPECIFICATION

(11) **EP 2 634 586 B1**
(45) Date of publication and mention of the grant of the patent: **11.12.2019**
(21) Application number: 11836244.1
(22) Date of filing: 25.10.2011
(51) Int. Cl.: G01N 35/10

(54) **AUTOMATIC ANALYSIS DEVICE**
AUTOMATIKANALYSEVORRICHTUNG
DISPOSITIF D'ANALYSE AUTOMATIQUE

(30) Priority: 27.10.2010 JP 2010240250
(43) Date of publication of application: 04.09.2013
(73) Proprietor: Hitachi High-Technologies Corporation, Tokyo 105-8717 (JP)
(72) Inventor: YAMAZAKI Isao, Hitachinaka-shi Ibaraki 312-8504 (JP); MORI Takamichi, Hitachinaka-shi Ibaraki 312-8504 (JP); ISHIZAWA Hiroaki, Hitachinaka-shi Ibaraki 312-8504 (JP); KUSANO Kazumi, Hitachinaka-shi Ibaraki 312-8504 (JP); KOMATSU Hidenobu, Hitachinaka-shi Ibaraki 312-8504 (JP)
(74) Representative: Mewburn Ellis LLP
(86) International application number: PCT/JP2011/074506
(87) International publication number: WO 2012/057111

(56) References cited:
- JP-A- 4 106 471
- JP-A- 4 186 137
- JP-A- 7 185 360
- JP-A- 10 123 152
- JP-A- 2007 155 656
- JP-A- 2008 058 127
- JP-A- 2009 156 744
- JP-U- H02 103 267
- US-A- 5 474 744
- US-A- 5 915 282

## Description

### Technical Field

The present invention relates to a method for handling an automatic analyzer analyzing blood, urine and other biological samples, and more particularly to an automatic analyzer that has a dispensing mechanism for dispensing a sample, a reagent or the like at a predetermined amount.

### Background Art

An automatic analyzer dispenses a sample composed of blood, urine or other biological samples in a reaction vessel on a reaction line. The automatic analyzer further dispenses a reagent in the reaction vessels containing the sample therein. The automatic analyzer uses measuring means such as a photometer to measure the compound liquid of the sample and the reagent for qualitative or quantitative analysis. A dispensing mechanism is generally used to suck both the sample and the reagent, the sample or the reagent contained in the reaction vessel therefrom at a predetermined amount and to discharge them or it from the reaction vessel at the predetermined amount. The dispensing mechanism includes a nozzle, a pump (a pressure changing mechanism) for sucking the sample or the reagent into the nozzle at a predetermined amount, a pipe line (a passage) connecting the pump with the nozzle and a shifting mechanism for shifting the nozzle. The pipe line has a flexible tube which is generally provided with a lengthwise downward hanging portion so as not to obstruct the movement of the nozzle. The bending point of the flexible tube is often located at a position lower than the position of the tip of the nozzle by approximately 200 mm. During the dispensing, the nozzle tip is dipped in the sample or the reagent in the vessel before the pump is operated to suck the sample or the reagent into the nozzle. In the state where the liquid is held in the nozzle, the nozzle is next lifted, shifted above the reaction line, and lowered into the reaction vessel and the liquid is pushed out by the pump. In this way, the dispensing is performed at a predetermined amount.

In this case, the liquid held in the nozzle is likely to spill out during the shifting of the nozzle. If such a splash of the liquid occurs, the dispensing amount varies, which is likely to affect analysis. To prevent such a splash, the technology described in patent document 1 proposes the method for reducing the movement speed of the nozzle to prevent the splash at the time of particular action.

US5474744 discloses an automatic pipetting device comprising only one pipetting needle having a tip end and an open end. The device comprises a metering syringe having an outlet. The device also comprises a mechanism for cleaning the pipetting needle with a cleaning fluid when the pipetting needle is positioned in a cleaning position. The mechanism comprises a plunger pump, a second tube having a first end and a second end, a first valve, a second valve, and a third tube having a first end and a second end, the second end of the tubing immersed in a cleaning fluid. The second end of the first tube is in fluid communication with both the outlet of the metering syringe and the first valve. The first end of the second tube is in fluid communication with the first valve. The second end of the second tube is in fluid communication with both the plunger pump and the second valve. The first end of the third tube is in fluid communication with the second valve. The mechanism for cleaning the pipetting needle is operated to activate the plunger pump and for opening and closing the first valve and the second valve, so as to establish a predetermined pressure of cleaning fluid in the second tube while the first and second valves are closed and subsequently to force the cleaning fluid through the pipetting needle while the first valve is open and the second valve is closed.

### Prior-art Documents

### Patent Documents

Patent document 1: JP-3-54474-A

### Summary of the Invention

### Problem to be Solved by the Invention

In recent years, automatic analyzers having a maximum throughput of 2000 tests/hour have been available. To ensure this analytical performance, one cycle takes as short as 1.8 seconds (= 3600 seconds ÷ 2000). In other words, the dispensing action has to be completed in 1.8 seconds. As described above, the dispensing action involves action such as "the suction of liquid, the shifting of a nozzle after sucking liquid to above a reaction vessel, the discharge of the liquid and the returning of the nozzle to an original position". Therefore, as described in patent document 1, there are limitations to reduce the movement speed of the nozzle. On the other hand, there has recently been a demand to reduce an analyzing running cost; therefore, it has been necessary to reduce the consuming amount of a reagent.
Thus, the dispensing amount of a reagent tends to decrease. In other words, even a slight amount of splash has a large influence on the accuracy of the dispensing amount.

It is an object of the present invention to provide an automatic analyzer that satisfies both high-throughput and the reliability of analysis.

### Means for Solving the Problem

The configuration of the present invention to achieve the above object is as below.

According to the present invention there is provided a method for handling an automatic analyzer as specified in claim 1.

The method for handling an automatic analyzer according to the present invention may optionally be as specified in any one of claims 2 to 6.

Liquid may be reagents, samples, detergents or others as long as they are used for analysis by analyzers. The nozzles are usually installed separately for a reagent and a sample from each other, such as specifically. However, a single nozzle may be used for a plurality of use applications. To avoid contamination in which different samples and reagents are mixed with each other, a one-way tip (disposable tip) may be attached to the tip of a nozzle during dispensing. To calculate the distance in such a case, the end of the disposable tip shall be deemed to be the tip of the nozzle. The pump may be syringes, diaphragms or others as long as they can vary the pressure in the nozzle. The flexible tube is generally a Teflon (registered trademark) tube with satisfactory durability or the like. However, the flexible tube may be anything as long as it is flexible. The tube has a diameter of approximately 2 mm or less; however, also thick tubes may be used as necessary.

As described earlier, the pipe line used for the nozzle of the conventional automatic analyzer generally has the flexible tube which partially hangs downward and lengthwise so as not to obstruct the movement of the nozzle. As describe later, the present inventor first found out the fact that the position of the bending portion and the amount of liquid spill-out of the nozzle have a causal relationship therebetween. On the basis of the new finding, the present invention can provide an automatic analyzer that can more suppress the amount of spill-out liquid than the conventional automatic analyzers.

### Effects of the Invention

The present invention can provide an automatic analyzer reconciling a high throughput and the reliability of an analyzer.

### Brief Description of the Drawings

Fig. 1 is an explanatory view illustrating the whole of a first embodiment.
Fig. 2 is a partial configuration view illustrating an essential portion of the first embodiment.
Fig. 3 is a graph showing the relationship between drive patterns and amounts of spill-out.
Fig. 4 is a graph showing the relationship between the length of a flexible tube and the amount of spill-out.
Fig. 5 is an explanatory view illustrating an essential portion of a second embodiment.
Fig. 6 is an explanatory view illustrating an essential portion of a third embodiment.
Fig. 7 is a graph showing the relationship between drive patterns and amounts of spill-out.
Fig. 8 is a graph showing the relationship between the length of a flexible tube and the amount of spill-out.

### Mode for Carrying Out the Invention

Embodiments of the present invention will hereinafter be described with reference to the drawings.

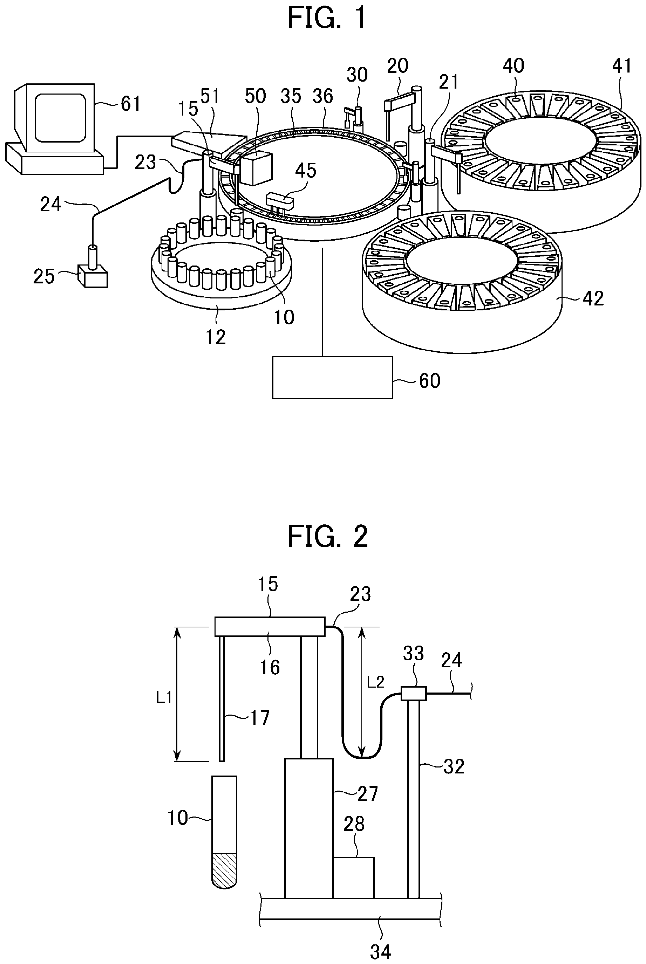

Figs. 1 and 2 illustrate one embodiment of an automatic analyzer embodying the invention.

The automatic analyzer includes a sample disk 12 on which a plurality of sample vessels 10 can be mounted, the sample vessels 10 each holding a sample; a first reagent disk 41 and a second reagent disk 42 on which a plurality of reagent vessels 40 each holding a reagent can be mounted; a reaction disk 36 on which a plurality of reaction vessels 35 are circumferentially disposed; a sample dispensing mechanism 15 for dispensing in the reaction vessel 35 the sample sucked from the sample vessel 10; a first reagent dispensing mechanism 20 for dispensing in the reaction vessel 35 the reagent sucked from the reagent vessel 40 on the first reagent disk 41; a second reagent dispensing mechanism 21 for dispensing in the reaction vessel 35 the reagent sucked from the reagent vessel 40 on the second reagent disk 42; a stirring device 30 for stirring the liquid in the reaction vessel 35; a vessel cleaning mechanism 45 for cleaning the reaction vessel 35; a light source 50 installed near the outer circumference of the reaction disk 36; a spectrometer 51; a computer 61 connected to the spectrometer 51; and a controller 60 for controlling the operation of the overall analyzer and exchanging data with the outside. The sample dispensing mechanism 15 is connected to a metering pump 25 via a flexible tube 23 and a stationary passage 24.

As illustrated in detail in Fig. 2, the sample dispensing mechanism 15 includes a dispensing arm 16 holding a vertically extending cylindrical nozzle 17; a drive mechanism 27 installed on a base 34 and driving the dispensing arm 16 in vertical and rotational directions; a motor 28 for moving the drive mechanism 27; a flexible tube 23 connected to the nozzle 17; a fixture 33 holding one end of the flexible tube 23 and connecting it with the stationary passage 24; and a support 32 installed on the base 34 and holding the fixture 33. The flexible tube 23 has a downward hanging portion between the dispensing arm 16 and the fixture 33. The hanging portion has a vertical length L2 set substantially equal to or slightly greater than a vertical length L1 of the sample dispensing mechanism 15. The first reagent dispensing mechanism 20 and the second reagent dispensing mechanism 21 have the same configuration as that of the sample dispensing mechanism 15.

The analyzer of the present embodiment is operated as below. The sample vessels 10 contain samples to be tested, such as blood and the like and are set on the sample disk 12. The types of analyses necessary for the respective samples are inputted in the controller 60. The sample taken by the sample dispensing mechanism 15 is dispensed, at a specific amount, in each of the reaction vessels 35 arranged on the reaction disk 36. A specific amount of reagent is dispensed in the reaction vessel 35 from the reagent vessel 40 installed on the reagent disk 41 or 42 by the reagent dispensing mechanism 20 or 21, respectively. The sample and the reagent in the reaction vessel 35 are stirred by the stirring device 30. The reaction disk 36 periodically repeats its turning and stoppage and the spectrometer 51 performs photometry every time the reaction vessel 35 pass anterior to the light source 50. The photometry is repeated during the reaction time of 10 minutes. Thereafter, the vessel cleaning mechanism 45 discharges the reaction liquid in the reaction vessel 35 and cleans the reaction vessel 35. During the discharge and the cleaning, other reaction vessels are concurrently subjected to operation using other samples and reagents. The data obtained by the photometry of the spectrometer 51 is computed by the computer 61 and the concentrations of components according to the types of the analyses are calculated and displayed.

The operation of the sample dispensing mechanism 15 is described in detail with reference to Fig. 2. The passage from the metering pump 25 to the nozzle 17 is filled with system water before a sample is sucked. A slight amount of air is sucked as segmented air at the tip of the nozzle 17. The dispensing arm 16 is lowered by the drive mechanism 27 and the tip of the nozzle 17 is inserted into the sample in the sample vessel 10. The metering pump 25 is suction-operated so that a specific amount of sample is sucked into the nozzle 17. Thereafter, the dispensing arm 16 is lift-operated and stopped at a home position by the drive mechanism 27. The home position has such a height as to be higher than the upper ends of the sample vessel 10 and the reaction vessel 35 and not to obstruct the turning action of the dispensing arm 16. After the stop of the lift, the drive mechanism 27 turns the dispensing arm 16, thereby shifting the nozzle 17 to a position above the reaction disk 36. Thereafter, the drive mechanism 27 lowers the dispensing arm 16 and inserts the tip of the nozzle 17 into the reaction vessel 35 and the metering pump 25 is discharge-operated. After a specific amount of sample is discharged into the reaction vessel 35, the nozzle 17 is lifted and cleaned for the next analysis.

The force that is applied to the internal fluid during the shifting of the dispensing arm 16 is here considered. If upward acceleration is given to lift the dispensing arm 16, also the fluid inside the passage is accelerated together, thereby causing inertia force. The inertia force is applied to the fluid inside the nozzle 17 in the direction against the upward acceleration. Therefore, a differential pressure of p (= ρ × L1 × a) occurs, where ρ represents fluid density, L1 represents a vertical length of the nozzle and "a" represents the upward acceleration of the nozzle. The inertia force is applied also to the fluid in the horizontal portion of the dispensing arm 16. However, the horizontal component is equal to zero; therefore, no pressure difference occurs. Of the flexible tube 23 a portion extending to the bending portion at the lower end thereof is moved concurrently with the dispensing arm 16; therefore, the inertia force is applied to the internal fluid, which causes a pressure difference of p = -ρ × L2 × a. The reason for the affixed minus is that the direction of the acceleration is opposite to that of the nozzle. Thus, the force by which the fluid is pushed out in the direction of the nozzle under a pressure of p = ρ × (L1 - L2) × a occurs at the bending portion of the flexible tube 23. In contrast, the fluid located from the metering pump 25 to the bending portion of the flexible tube 23 is subjected to the negative pressure of p = -ρ × (L1 - L2) × a. Therefore, the passage material is elastically deformed and the fluid expands to cause a slight amount of shifting. Consequently, the liquid in the amount proportional to [ρ × (L1 - L2) × a] spills out of the tip of the nozzle 17. If [ρ × (L1 - L2) × a] is minus, not the spill-out but suction occurs. The same phenomenon occurs also when the lift of the sample dispensing mechanism 15 is stopped, or when the lowering thereof is started or stopped.

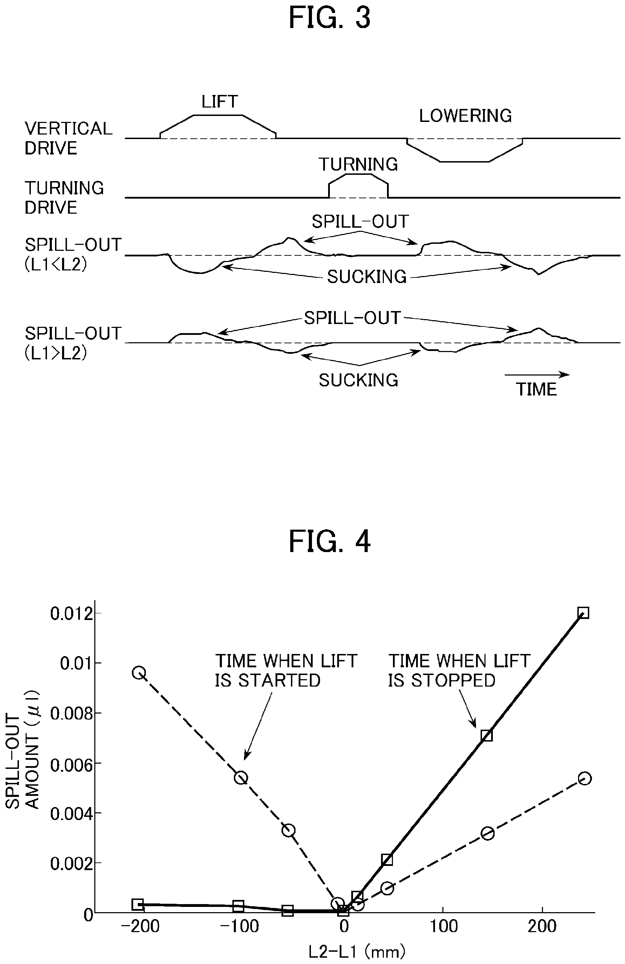

Fig. 3 is a graph showing the patterns of vertical drive and turning-drive of the dispensing arm 16 and the amounts of liquid spill-out of the nozzle tip. The amounts of spill-out are results obtained by calculating transit response encountered when the above-mentioned pressure difference occurs in the configuration of the dispensing passage of a typical automatic analyzer. If L1 is shorter than L2, the spill-out occurs when lift is stopped or lowering is started. If L1 is longer than L2, the spill-out occurs when the lift is started or the lowering is stopped.

Fig. 4 shows results obtained by calculating the relationship between "L2 - L1" and the amount of spill-out. The amounts of spill-out encountered when the lift is started and when stopped are calculated in the configuration of the dispensing passage of the typical automatic analyzer. It is seen that if "L2 - L1" is smaller than 0, the amount of spill-out encountered when the lift is started increases in proportion to the difference in length. In addition, if "L2 - L1" is greater than 0, the amount of spill-out encountered when the lift is stopped increases in proportion to the difference in length. If the spill-out occurs when the lift is started, even a slight amount of the spill-out easily causes a splash due to vibrations during the lift. However, a slight amount of the spill-out liquid encountered when the lift is stopped causes no splash. Thus, it is desirable that L1 and L2 be made equal to each other or L2 be set slightly longer than L1.

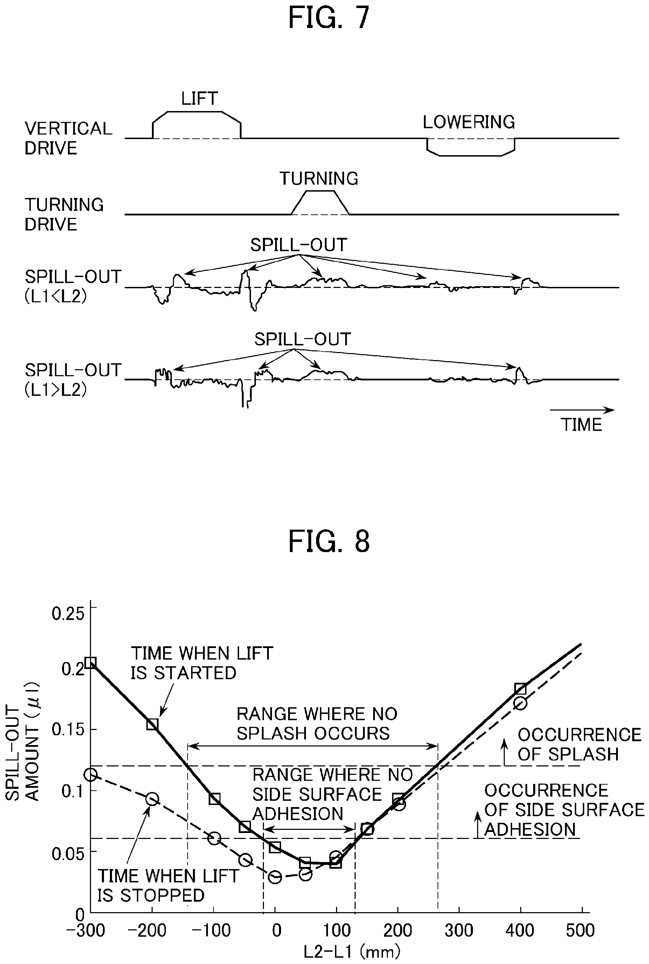

Fig. 7 shows results obtained by actually measuring acceleration at various parts of the dispensing passage of the typical automatic analyzer and using such data to calculate the amounts of spill-out. Unlike the results in Fig. 3, not only in the case where L1 is shorter than L2 but in the case where L1 is longer than L2, spill-out occurs every time the lift is started or stopped and the lowering is started or stopped. Further, also during turning, spill-out occurs. This is because the overall dispensing mechanism vibrates during vertical drive and turning and the acceleration resulting from the vibration is applied to the various parts of the dispensing passage.

Fig. 8 shows results obtained by calculating the relationship between "L2 - L1" and the amount of spill-out. Unlike the results in Fig. 4, the calculation is made using the data of the acceleration actually measured by an acceleration sensor attached to the automatic analyzer with a typical configuration. It is seen that in the case where "L2 - L1" is not only minus but plus, the amount of spill-out encountered when the lift is stopped is greater than that encountered when the lift is started. In addition, the amount of spill-out is minimized at such a point that 0 mm =< "L2 - L1" =< 100 mm. The reason for such results is as below. Unlike the conditions under which the calculations with Fig. 4 are performed, actual acceleration applied to the dispensing mechanism involves not only the acceleration resulting from the lift and stop of the dispensing mechanism but also the acceleration resulting from the increased vibration component caused by the former acceleration. The vibratory acceleration involves a component horizontally applied to the dispensing arm 16. In addition, that is not to say that the accelerations applied to the nozzle 17 and the flexible tube 23 are thoroughly reverse components. Thus, the amount of spill-out does not become equal to zero completely. Nevertheless, it is seen that the amount of spill-out is small under the condition that "L2 - L1" is small.

Fig. 8 further shows the range of a spill-out amount comparable to the splash-occurring condition and the range where adhesion of liquid to the side surface of the nozzle occurs, which are obtained from another experiment. If the amount of spill-out is equal to or greater than 0.06 µl, spill-out liquid may not be pulled back into the nozzle but adhere to the side surface of the nozzle in some cases. If the amount of spill-out is equal to or greater than 0.12 µl, the spill-out liquid may fly apart and splash in some cases. Thus, it is seen that this dispensing system does not cause splash if "L2 - L1" is such that -140 mm =< "L2 - L1" =< 260 mm. In addition, stable dispensing in which also side surface adhesion of liquid does not occur can be performed if "L2 - L1" is such that -30 mm =< "L2 - L1" =< 130 mm.

The present embodiment is configured such that L1 is substantially equal to L2 if the dispensing arm 16 is located at its home position. The specific permissible range in the present embodiment is as below. The value of "L2 - L1" is such that -30 mm =< "L2 - L1" =< 130 mm, which is a range where side surface adhesion does not occur. Preferably, the value of "L2 - L1" is such that 0 mm =< "L2 - L1" =< 130 mm, which is a range where the amount of spill-out encountered when the lift is started and when stopped is further reduced. Further preferably, the value of "L2 - L1" is such that 0 mm =< "L2 - L1" =< 50 mm, which is a range where the amount of spill-out encountered when the lift is started and when stopped is further reduced. If "L2 - L1" is such that 0 mm =< "L2 - L1" =< 50 mm, the range where the amount of spill-out encountered when the lift is started and when stopped is minimized is included at minimum.
Therefore, the amount of spill-out encountered when the lift is started and when stopped can be suppressed to a low level. In this way, a pressure difference resulting from the inertia force applied to the internal fluid in the nozzle 17 and the flexible tube 23 when the lift is started and when stopped is small, so that the amount of liquid spill-out of the nozzle tip is small. Therefore, the internally held sample is not be splashed and a predetermined amount of sample can be dispensed in the reaction vessel 35 without a loss. Thus, analysis can be performed at a high degree of accuracy. The sample is not splashed, so that it does not contaminate the environment. In addition, the sample does not spill in the reaction vessel 35 that is not a target. Thus, the safe and highly-reliable analyzer can be provided.

Incidentally, under the conditions of the present embodiment, as shown in Fig. 4, the amount of spill-out encountered when the lift is stopped is greater than that when the lift started. Therefore, it is advantageous that the permissible range is set such that L2 is slightly longer than L1 when the lift is stopped. However, there is a case where the amount of spill-out encountered when the lift is started is problematic depending on the configuration of an analyzer. In such a case, also the range can be set such that L2 is slightly longer than L1 encountered not when the lift is stopped but when started.

In the present embodiment, since the pressure difference resulting from the inertia force is reduced, splash does not occur even if the dispensing mechanism is operated at high speeds. The analyzer can be operated at high speeds. Thus, the analyzer having high throughput per unit time can be provided.

In the present embodiment, a dispensing error resulting from a splash is small; therefore, even if the amounts of a sample and a reagent used for analysis are made small, the analysis is not affected by variations resulting from the splash. Thus, the analyzer can be provided that consumes small amounts of the sample and reagent.

In the embodiment, L1 is longer than L2 in the state where the dispensing arm 16 is lowered, and the spill-out occurs when the lift is started or when the lowering is stopped. However, if the dispensing arm 16 is located at the home position, L1 is substantially equal to L2. Even if the dispensing arm 16 is located at the lowered position, a difference between L1 and L2 is small. The spill-out has a small influence on the dispensing. Thus, the present embodiment can provide analysis with a high degree of accuracy.

In the present embodiment, the amount of spill-out encountered when lift is stopped is small and additionally, the spill-out is instantaneous. The spill-out liquid is held by surface tension at the nozzle tip, and does not drop down but is pulled back as it is, which does not influence a dispensing amount. Thus, the safe and highly accurate analyzer can be provided.

In the present embodiment, the dispensing arm 16 turns after a small interval after lifted. Even if spill-out occurs, the spill-out liquid is pulled back in the nozzle before the dispensing arm 16 is turned. Therefore, the liquid that spills out through the centrifugal force resulting from the turning does not splash. Thus, the safe and highly accurate analyzer can be provided.

In the present embodiment, the nozzle has a slight amount of segmented air therein, which prevents mixing of the system water and the reagent. The segment air in the nozzle has small ρ. Thus, if L2 is made shorter than L1 in accordance with the small ρ, splash can be further reduced.

In the present embodiment, the length of the flexible tube 23 is composed of L2 equal to the length of the nozzle and a length from the bending portion to the fixture 33; therefore, the length of the flexible tube 23 is short. Thus, the safe and highly accurate analyzer can be provided that is subjected to small vibration resulting from the operation and has no adverse effect resulting from the vibration of the flexible tube.

In the present embodiment, it is seen that the timing of the possible spill-out of liquid is when the lift is stopped and when the lowering is started. A slight amount of liquid is sucked by the metering pump 25 in the middle of the lift of the nozzle, making it possible to retreat the sample at the tip of the nozzle. Thus, the safe and highly accurate analyzer can be provided that further reduces the possibility of the spill-out.

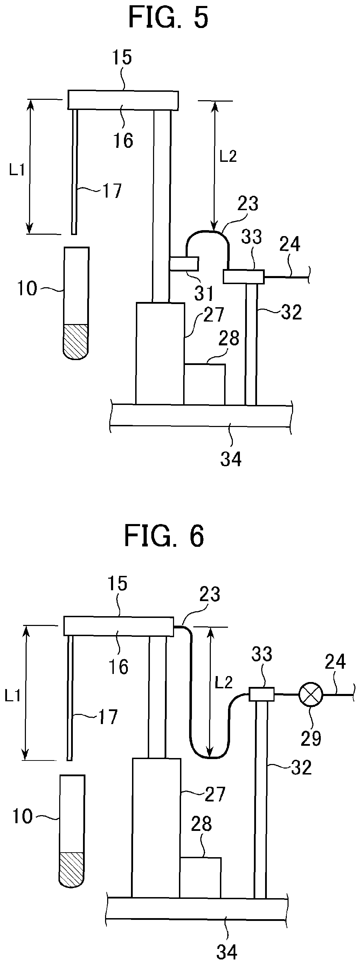

Another embodiment of the present invention is described with reference to Fig. 5. The present embodiment is different from the first embodiment in that a flexible tube 23 passes through the inside of a dispensing arm 16 and bends upward from a tube outlet 31. In this case, a portion up to the upward bending portion of the flexible tube 23 is accelerated concurrently with the dispensing arm 16 to generate inertia force. However, if the inertia force applied to the fluid in the inside portion of the flexible tube 23 is added to the inertia force applied to the fluid in the inside portion of the dispensing arm 16, it finally causes a pressure difference p (= -ρ × L2 × a) in proportion to the length L2 from the upper end of the dispensing arm 16 to the bending portion of the flexible tube 23. Thus, the same effects as those of the embodiment with Fig. 2 can be produced.

In the present embodiment, the freely movable portion of the flexible tube 23 is only between the tube outlet 31 and a fixture 33. The flexible tube 23 requires a shorter length, so that it is further unlikely to vibrate. Thus, the highly-reliable analyzer can be provided.

Another embodiment of the present invention is described with reference to Fig. 6. The present embodiment is different from the first embodiment in that an electromagnetic valve 29 is installed in the middle of a stationary passage 24. In the present embodiment, the electromagnetic valve 29 is closed after the suction of a sample and before the start of discharge. In this way, when a dispensing arm 16 is lifted or lowered, even if pressure resulting from the inertia force of fluid occurs, the elastic deformation of a passage material and the expansion of the fluid occur only downstream of the electromagnetic valve 29. Therefore, the spill-out of the fluid is suppressed to a slight amount. Thus, the safe and highly accurate analyzer that does not cause splash can be provided.

In the present embodiment, even if lengths L1 and L2 have some difference therebetween, spill-out can be suppressed by the electromagnetic valve 29. Therefore, there is an advantage that the flexibility of the arrangement of the flexible tube 23 is increased. In the case of the configuration of a typical automatic analyzer, the provision of the electromagnetic valve 29 can effectively reduce spill-out if a difference in height between a nozzle tip and the bending portion of the flexible tube 23 is up to approximately 200 mm. The height difference that can effectively reduce the spill-out depends on the drive speed of the dispensing arm 16, the shape of a passage, the accuracy of a dispensing amount required for the analyzer and the like.

### Explanation of Reference Numerals

- 10: Sample vessel
- 12: Sample disk
- 15: Sample dispensing mechanism
- 16: Dispensing arm
- 17: Nozzle
- 20: First reagent dispensing mechanism
- 21: Second reagent dispensing mechanism
- 23: Flexible tube
- 24: Stationary passage
- 25: Metering pump
- 27: Drive mechanism
- 28: Motor
- 29: Electromagnetic valve
- 30: Stirring device
- 31: Tube outlet
- 32: Support
- 33: Fixture
- 34: Base
- 35: Reaction vessel
- 36: Reaction disk
- 40: Reagent vessel
- 41: First reagent disk
- 42: Second reagent disk
- 45: Vessel cleaning mechanism
- 50: Light source
- 51: Spectrometer
- 60: Controller
- 61: Computer

## Claims

1. A method for handling an automatic analyzer, said automatic analyzer comprising:
a nozzle (17) for sucking liquid to be dispensed;
a pump (25) for generating pressure variations allowing suction of the liquid into the nozzle (17);
a passage (23, 24) connecting the nozzle (17) with the pump (25); and
a drive mechanism (27) for shifting the nozzle (17) in horizontal and vertical directions;
wherein the passage (23, 24) is at least partially composed of a flexible tube (23) and the flexible tube (23) has an upward or downward convex bending portion in the middle thereof, the convex bending portion changing in position and shifting along with the drive mechanism (27) at a nozzle (17) side, and
wherein, when the nozzle (17) is shifted horizontally, a value obtained by subtracting a vertical distance (L₁) between a tip portion of the nozzle (17) and the uppermost portion of the nozzle (17) from a vertical distance (L₂) between a top of a convex portion of the flexible tube (23) and an uppermost portion of the nozzle (17) is a value ranging from -30 mm to 130 mm.

2. The method for handling an automatic analyzer according to claim 1,
wherein the value obtained by subtracting the vertical distance (L₁) between the tip portion of the nozzle (17) and the uppermost portion of the nozzle (17) from the vertical distance (L₂) between the top of the convex portion of the flexible tube (23) and the uppermost portion of the nozzle (17) is a value ranging from 0 mm to 130 mm.

3. The method for handling an automatic analyzer according to claim 1,
wherein the value obtained by subtracting the vertical distance (L₁) between the tip portion of the nozzle (17) and the uppermost portion of the nozzle (17) from the vertical distance (L₂) between the top of the convex portion of the flexible tube (23) and the uppermost portion of the nozzle (17) is a value ranging from 0 mm to 50 mm.

4. The method for handling an automatic analyzer according to any one of claims 1 to 3,
wherein a segmented gas layer allowing gas to separate liquid from liquid is provided in the liquid in the nozzle (17) and a value obtained by subtracting a distance obtained by adding a length of the segmented air layer to the vertical distance (L₁) between the tip portion of the nozzle (17) and the uppermost portion of the nozzle (17) from the vertical distance (L₂) between the top of the convex portion of the flexible tube (23) and the uppermost portion of the nozzle (17) is defined as that defined in any one of claims 1 to 3.

5. The method for handling an automatic analyzer according to any one of claims 1 to 3,
wherein the pump (25) is suction-operated during lift of the nozzle (17).

6. The method for handling an automatic analyzer according to any one of claims 1 to 3,
wherein an electromagnetic valve (29) is installed on the passage (23, 24) between the nozzle (17) and the pump (25), and the nozzle (17) is shifted with the electromagnetic valve (29) closed.

## Patentansprüche

1. Verfahren zur Bedienung einer automatischen Analysevorrichtung, wobei die automatische Analysevorrichtung Folgendes umfasst:
eine Düse (17) zum Einsaugen von Flüssigkeit, die abgegeben werden soll;
eine Pumpe (25) zur Erzeugung von Druckvariationen, wodurch das Ansaugen der Flüssigkeit in die Düse (17) ermöglicht wird;
einen Durchlass (23, 24), der die Düse (17) mit der Pumpe (25) verbindet; und
einen Antriebsmechanismus (27) zur Verschiebung der Düse (17) in horizontaler und vertikaler Richtung;
wobei der Durchlass (23, 24) zumindest teilweise aus einem flexiblen Schlauch (23) besteht und der flexible Schlauch (23) in der Mitte einen nach oben oder nach unten konvexen Biegeabschnitt aufweist, wobei der konvexe Biegeabschnitt gemäß dem Antriebsmechanismus (27) auf einer Seite der Düse (17) seine Position verändert und sich verschiebt und
wobei, wenn die Düse (17) horizontal verschoben wird, ein Wert, der durch das Subtrahieren eines Vertikalabstands (L₁) zwischen einem Spitzenabschnitt der Düse (17) und dem obersten Abschnitt der Düse (17) von einem Vertikalabstand (L₂) zwischen einer Oberseite eines konvexen Abschnitts des flexiblen Schlauchs (23) und einem obersten Abschnitt der Düse (17) erhalten wird, ein Wert im Bereich von -30 mm bis 130 mm ist.

2. Verfahren zur Bedienung einer automatischen Analysevorrichtung nach Anspruch 1, wobei der Wert, der durch das Subtrahieren des Vertikalabstands (L₁) zwischen einem Spitzenabschnitt der Düse (17) und dem obersten Abschnitt der Düse (17) von dem Vertikalabstand (L₂) zwischen der Oberseite des konvexen Abschnitts des flexiblen Schlauchs (23) und dem obersten Abschnitt der Düse (17) erhalten wird, ein Wert im Bereich von 0 mm bis 130 mm ist.

3. Verfahren zur Bedienung einer automatischen Analysevorrichtung nach Anspruch 1, wobei der Wert, der durch das Subtrahieren des Vertikalabstands (L₁) zwischen dem Spitzenabschnitt der Düse (17) und dem obersten Abschnitt der Düse (17) von dem Vertikalabstand (L₂) zwischen der Oberseite des konvexen Abschnitts des flexiblen Schlauchs (23) und dem obersten Abschnitt der Düse (17) erhalten wird, ein Wert im Bereich von 0 mm bis 50 mm ist.

4. Verfahren zur Bedienung einer automatischen Analysevorrichtung nach einem der Ansprüche 1 bis 3, wobei eine segmentierte Gasschicht, die ermöglicht, dass Gas Flüssigkeit von Flüssigkeit trennt, in der Flüssigkeit in der Düse (17) bereitgestellt ist und ein Wert, der durch das Subtrahieren eines Abstands, der durch das Addieren einer Länge der segmentierten Luftschicht zu dem Vertikalabstand (L₁) zwischen dem Spitzenabschnitt der Düse (17) und dem obersten Abschnitt der Düse (17) erhalten wird, von dem Vertikalabstand (L₂) zwischen der Oberseite des konvexen Abschnitts des flexiblen Schlauchs (23) und dem obersten Abschnitt der Düse (17) erhalten wird, wie in einem der Ansprüche 1 bis 3 definiert ist.

5. Verfahren zur Bedienung einer automatischen Analysevorrichtung nach einem der Ansprüche 1 bis 3, wobei die Pumpe (25) während des Anhebens der Düse (17) saugbetätigt wird.

6. Verfahren zur Bedienung einer automatischen Analysevorrichtung nach einem der Ansprüche 1 bis 3, wobei ein elektromagnetisches Ventil (29) an dem Durchlass (23, 24) zwischen der Düse (17) und der Pumpe (25) eingebaut ist und die Düse (17) verschoben wird, wenn das elektromagnetische Ventil (29) geschlossen ist.

## Revendications

1. Procédé pour manipuler un analyseur automatique, ledit analyseur automatique comprenant :
une buse (17) pour aspirer du liquide à distribuer ;
une pompe (25) pour générer des variations de pression permettant une aspiration du liquide dans la buse (17) ;
un passage (23, 24) reliant la buse (17) à la pompe (25) ; et
un mécanisme d'entraînement (27) pour déplacer la buse (17) dans des directions horizontale et verticale ;
dans lequel le passage (23, 24) est au moins partiellement composé d'un tube flexible (23) et le tube flexible (23) présente une partie de flexion convexe vers le haut ou vers le bas en son milieu, la partie de flexion convexe changeant de position et se décalant avec le mécanisme d'entraînement (27) au niveau du côté de la buse (17), et
dans lequel, lorsque la buse (17) est décalée horizontalement, une valeur obtenue en soustrayant une distance verticale (L₁) entre une partie d'extrémité de la buse (17) et la partie la plus haute de la buse (17) d'une distance verticale (L₂) entre une partie supérieure d'une partie convexe du tube flexible (23) et une partie la plus supérieure de la buse (17) est une valeur allant de -30 mm à 130 mm.

2. Procédé de manipulation d'un analyseur automatique selon la revendication 1,
dans lequel la valeur obtenue en soustrayant la distance verticale (L₁) entre la partie d'extrémité de la buse (17) et la partie la plus supérieure de la buse (17) de la distance verticale (L₂) entre la partie supérieure de la partie convexe du tube flexible (23) et la partie la plus supérieure de la buse (17) est une valeur dans la plage de 0 mm à 130 mm.

3. Procédé de manipulation d'un analyseur automatique selon la revendication 1,
dans lequel la valeur obtenue en soustrayant la distance verticale (L₁) entre la partie d'extrémité de la buse (17) et la partie la plus supérieure de la buse (17) de la distance verticale (L₂) entre la partie supérieure de la partie convexe du tube flexible (23) et la partie la plus supérieure de la buse (17) est une valeur dans la plage de 0 mm à 50 mm.

4. Procédé de manipulation d'un analyseur automatique selon l'une quelconque des revendications 1 à 3,
dans lequel une couche de gaz segmentée permettant au gaz de séparer du liquide à partir d'un liquide est fournie dans la buse (17) et une valeur obtenue en soustrayant une distance obtenue en ajoutant une longueur de la couche d'air segmentée à la distance verticale (L₁) entre la partie d'extrémité de la buse (17) et la partie la plus supérieure de la buse (17) de la distance verticale (L₂) entre la partie supérieure de la partie convexe du tube flexible (23) et la partie la plus supérieure de la buse (17) est définie comme celle définie dans l'une quelconque des revendications 1 à 3.

5. Procédé de manipulation d'un analyseur automatique selon l'une quelconque des revendications 1 à 3,
dans lequel la pompe (25) fonctionne par aspiration pendant le soulèvement de la buse (17).

6. Procédé de manipulation d'un analyseur automatique selon l'une quelconque des revendications 1 à 3,
dans lequel une électrovanne (29) est installée sur le passage (23, 24) entre la buse (17) et la pompe (25), et la buse (17) est décalée avec l'électrovanne (29) fermée.
